Europäisches Patentamt

European Patent Office

Office européen des brevets

(11) Publication number: **0 223 508**
A2

# (12) EUROPEAN PATENT APPLICATION

(21) Application number: 86308641.9

(22) Date of filing: 05.11.86

(51) Int. Cl.⁴: **G 02 B  5/32**, G 02 B  26/10

(30) Priority: 06.11.85  US 795310

(43) Date of publication of application: 27.05.87
Bulletin 87/22

(84) Designated Contracting States: BE DE FR GB IT LU NL

(71) Applicant: HOLOGRAPHIX INC., 2 Forbes Road,
Lexington Massachusetts 02173 (US)

(72) Inventor: Clay, Burton R., 55 Sedgemeadow Road,
Wayland Massachusetts (US)

(74) Representative: Hughes, Brian Patrick et al, Graham
Watt & Co. Riverhead, Sevenoaks, Kent TN13 2BN (GB)

(54) Scanner system having rotating deflector hologram.

(57) A scanner system uses rotating, high efficiency holograms
to deflect a light beam achieving a linear scan. The hologram al-
lows high system efficiency without requiring the input polari-
zation to be aligned to the fringe pattern.

# SCANNER SYSTEM HAVING ROTATING DEFLECTOR HOLOGRAM

The present invention relates to laser scanner systems, and , more particularly, to laser scanner systems of the holographic type.

The advantages of using holographic deflection technology for laser scanner systems rather than rotating polygons or galvanometer-driven mirrors are well-known. Implementation of holographic systems, at present, has several limitations. First, the maximum system efficiency attainable demands either (a) that so-called Bragg holograms be used which can have nearly one hundred percent (100%) internal efficiency (Bragg holograms are fragile and not amendable to replication), or (b) that deep-groove holograms be used which can approach nearly one hundred percent (100%) internal efficiency. In addition, the type of hologram chosen can introduce optical aberrations and distortion in the system; for example, a) so-called Seidel aberrations and b) line bow.

As is well-known, hologram efficiency is polarization-dependent. Present day holographic scanners therefore use polarized lasers with the polarization orientations determined by hologram fringe direction. A scanner using a hologram dependent on a plane polarized beam cannot be used to read paper documents, since the light reflected from a diffusing object, such as paper, would not retain its polarization. Diffusely reflected light, even when the source is polarized, has random polarization. The polarization directions can be resolved into so-called p and s components and the efficiency calculated for each meridian. To maximize efficiency for randomly polarized light, the hologram must have substantially equal s and p plane terms.

A scanner has been described in U.S. Patent NO. 4,239,326 (Kramer) as one which uses an array of linear sine wave grating segments recorded holographically on a disk. However, in such scanner, there is a dependency of efficiency on p-plane polarization. The use of this configuration has two disadvantages: (a) the scanned line is not straight, but has a bow dependent on small changes in the incident angle; and (b) the high diffraction efficiency is obtained for only one polarization direction, so that if an attempt is made to use such a scanner to read a diffuse surface, such as a sheet of paper, the polarization is lost and the efficiency is correspondingly lowered. Thus, a scanner incorporating the above holographic elements can be used for a recording scanner, but not for reading through common optics.

Another scanner system is shown in U.S. Patent No. 3,953,105 (Darien) in which an typical spinner is used to direct coherent light toward a scanning focal point locus. In such system, however, an auxiliary reflective element, such as a spherical mirror, must be used, thereby increasing system cost and alignment difficulty.

It is, accordingly, a primary object of the present invention to provide a scanner system having immunity from polarization dependence, having improved line bow correction and which reduces image aberrations.

The present invention is a holographic spinner having a plurality of hologram sectors for diffracting light along a scan path as the spinner is rotated about a central spinner axis, characterised in that the hologram sectors diffract with a barrel distortion property opposite to the scan line bow caused by rotation of the spinner, so as to produce a substantially linear scan line.

The present invention is also a scanning system comprising:  A. an optical spinner having a surface rotatable about an axis that is substantially perpendicular to said surface at its point of interaction with said axis;  said spinner divided into a plurality of segments;  B. a plurality of optical elements each capable of processing light by diffraction in a predetermined manner, each of said elements included respectively in a portion of said segments; C. wherein said portions of said segments are coupled for receiving a light beam at the portion of said segments which include said elements, said light beam received at a predetermined angle in order to maximize efficiency of said sysem for randomly polarized light;  D. a scanning plane;  E. means for receiving said light at said scanning plane after

- 4 -

said light is diffracted by said elements;  and F. correction means, included in said elements, for enabling a substantially straight line scan locus on said scanning plane as said spinner rotates.

BRIEF DESCRIPTION OF THE DRAWINGS

The above and other objects of the present invention are achieved in the illustrative embodiment as described with respect to the Figures in which:

Figure 1 shows a system in which a standard hologram is used thereby giving an undesirable bowed scan locus;

Figure 2 shows a system in which the unique holographic apparatus of the present invention is used to substantially eliminate the bow of the scan locus;

Figure 3 illustrates the manner in which the unique holographic apparatus of the present invention is recorded;

Figure 4 illustrates in more detail the recorded holographic apparatus of the present invention;

Figure 5 illustrates a write only scanner system utilizing the holographic apparatus of the present invention;  and

Figure 6 illustrates a read/write scanner system utilizing the holographic apparatus of the present invention.

## DETAILED DESCRIPTION OF THE PREFERRED EMBODIMENT(S)

The subject of the present invention is a holographic scanner which may be used to both read and write. The apparatus of the present invention is configured so that the diffraction efficiencies for both the s and p polarization are each substantial, and may be substantially the same so that light scattered from a diffuse surface causing the reflected light to become randomly polarized will not impair operation with high efficiency.

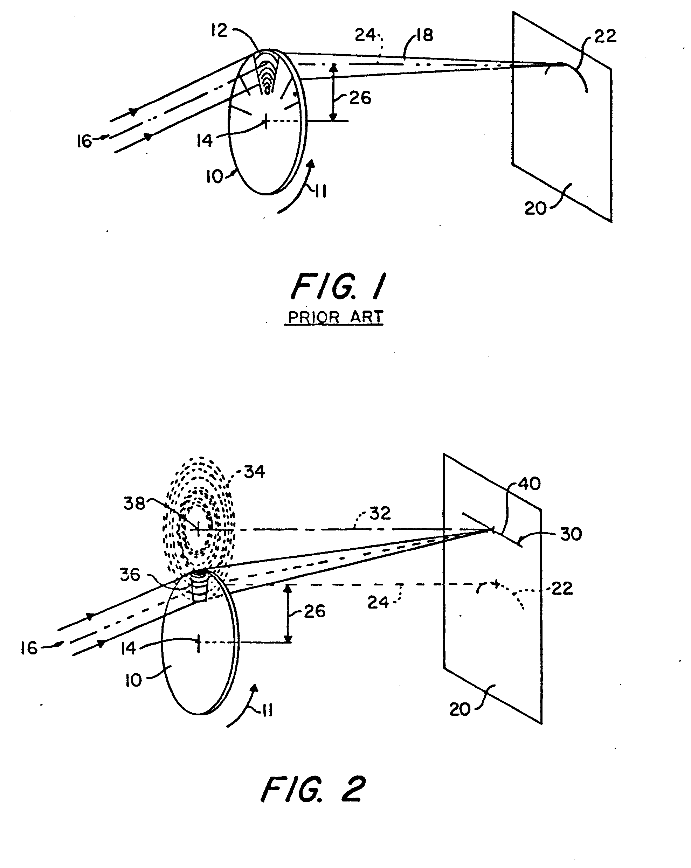

In order for the hologram to be configured so as to produce high efficiency for both the p and s plane polarizations, an incident angle of approximately twenty-three degrees may be used. See, for example, Figure 32 at page 2717 of the October, 1977 issue (Volume 16, No. 10) of Applied Optics magazine. This shows that at an angle of 23° ± approximately 2°, the p and s curves are substantially equal and close to their maximum efficiency. Fairly high joint s and p efficiency may also be obtained for larger angles, up to 30° or more, with some dropoff in s efficiency. However, a linear grating with a grating constant optimized for an incidence angle of twenty-three degrees produces a severely bowed scan line and is, therefore, unsuitable for most scanning applications. Thus, the hologram, which is not a linear grating, can use an angle of approximately twenty-three degrees angular incidence so as to correct for line-bow by employing a fringe field shaped according to system requirements. For example, line-bow correction can be accomplished by recording a hologram disk segment which has a fringe shape and spatial distribution giving it the property of a lens. If a number of such segments are recorded on the disk, the incident beam would be focussed and the focussed spot from each segment due to the rotation of the disk would produce a spot locus which is a circular segment in the focal plane. The scan locus in the focal plane would pass through the segment axis as shown in Figure 1.

The disk 10 with hologram 12 and rotation axis 14 is shown to rotate in the direction indicated by the arrow 11. A source of light 16, such as a laser beam, is shown to impinge on disk 10 and therefore hologram 12. The beam is deflected to form a convergent beam 18 which impinges on surface 20 to produce a scan locus 22 which is bowed. The axis 24 of the convergent beam 18 has a radius 26 from the rotation axis 14.

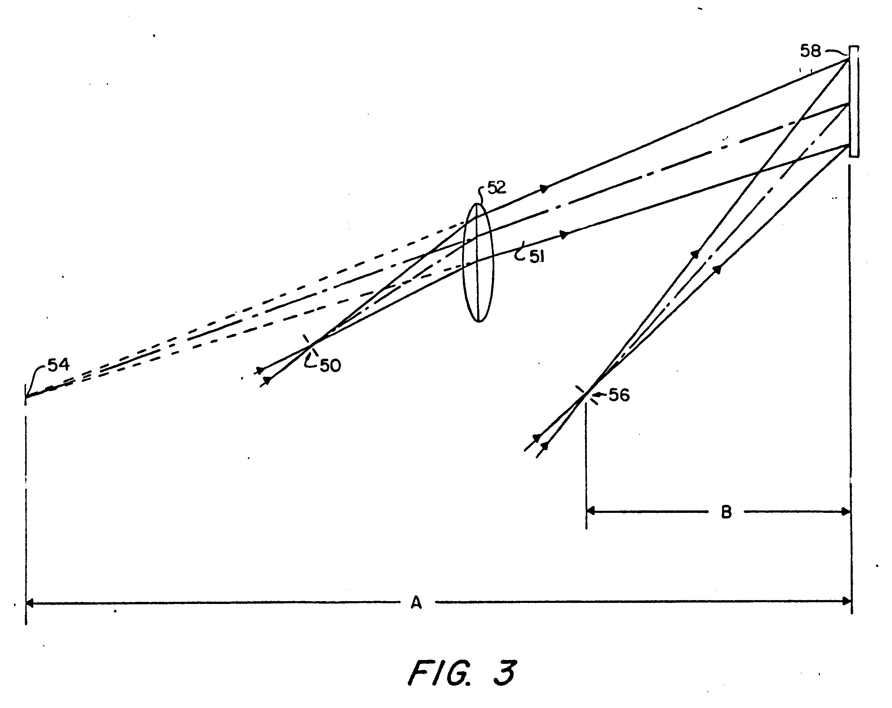

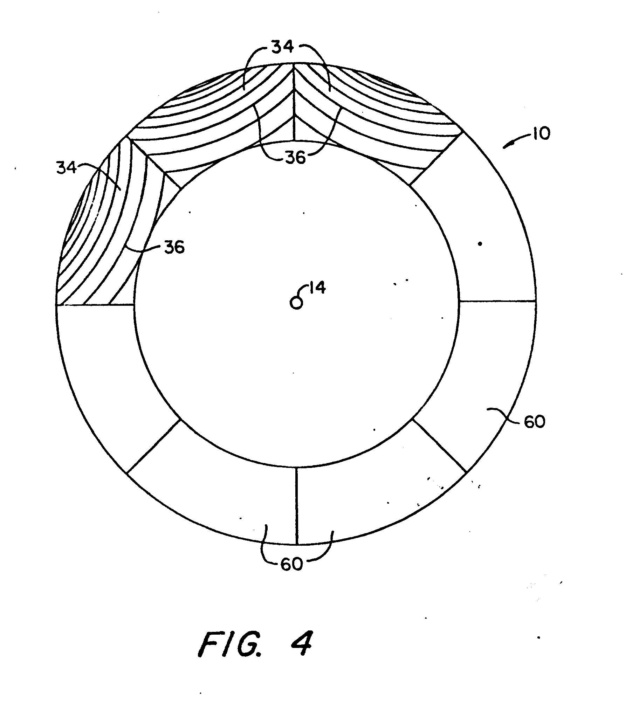

However, as shown in Figure 2, if the center of the holographically recorded disk 10 is displaced from the optical axis with the radius 26 unchanged, then the curvature of the line segment can be made to change provided the holographically recorded lens behaves as one which has barrel distortion. Thus, in Figure 2, the geometrical relationship of the hologram 34 to the disk 10 is shown. The center 38 of hologram 34 having a fringe pattern of circular lines 36 is oriented so that the hologram axis 32 is directed in a straight path to scan locus 40. The configuration of the holographix recording on disk 10 is shown in detail in Figure 4. In the example shown in Figure 2, it can be seen that if the disk 10 is designed to have barrel distortion, the curvature produced by the disk 10 subtracts from the curvature produced by rotating the disk. If the holographically recorded lens is designed to produce a curvature equal to that caused by rotating the disk, then the line will be substantially straight. The extent of curvature of a line varies directly as the ray height for a lens of given barrel distortion. Therefore, the lens offset is adjusted to obtain the required line curvature for neutralizing the curvature due to disc rotation. Thus, as shown in Figure 3, the lens 52 is shown offset from the beam received via filter 50.

This hologram lens has two significant properties, first, it corrects the line curvature; and second, it focusses the incident beam to a point on the focal plane, and , thus, may eliminate the need for a focussing lens, The second property of the hologram lens segment, however, has limited practical usefulness, since aberrations necessarily result from such an arrangement. In some cases, the hologram lens segment can replace the scan lens, particularly those cases in which diffraction limited resolution is not required, and in which a small scan angle is satisfactory. For high resolution and/or wide angle applications, the system described here, however, takes advantage of the second property by distributing the focussing power between the hologram and an auxiliary scan lens.

The subject of the present invention is a system which improves immunity from polarization dependence and which uses a hologram having properties which allow correction of scan line bow (curvature) and which cause an arbitrarily chosen amount of focussing, but not so much as to induce undesirable astigmatism. The hologram segment and lens performs the system focussing function. Since the power of the lens used in conjunction with the hologram segments is less than that needed for a stand-alone system, (such as are used in present state-of-the-art holographic scanners), then the f-number may be larger (other parameters remaining the same). In general, large f-number lenses are simpler and less costly than smaller f-number lenses for the same application. The overall scanner cost is therefore, reduced.

Some scanner applications may demand the reading of objects which reflect polarized light in ways specific to the material of which the object is composed. For example, if the object is birefringent, the input light reflected back into the readout paths would acquire specific ratios of s and p polarizations. The subject of the present invention is a hologram which allows adjustment of the s and p polarization component diffraction efficiencies to accommodate a wide variety of objects to be scanned. The adjustments made in the recording system to change the diffraction efficiency of the p to s polarization ratio are (a) angular incidence of the object beam, (b) curvature of the reference beam wave front to correct for line bow, (c) adjustment of h/d and (d) adjustment of $m \lambda/d$.

A recording system for the above-described holographic lens segments must take into account three important factors: (i) the desired spread of polarization orientation efficiency; (ii) the spatial distribution of the fringes and the shape necessary for obtaining the required barrel distortion, as well as the effective lens powers; and (iii) the wavelength translation-induced aberrations (if the hologram is recorded at a different wavelength than that of the readout).

These factors are dealt with as follows. If maximum polarization immunity, i.e., substantial or equal s and p plane efficiency, is required through the system during readout, then the recording system is set up to allow angles of incidence (at readout) to be specified at some angle, e.g., between approximately twenty-one degrees and twenty-three degrees or at an angle where the s and p efficiencies are jointly maximized. The consequence of this arrangement is that the resulting hologram will produce a scan line which is bowed - if the hologram is linear grating type. If other specific ratios of s and p plane are required, then an angle substantially different than twenty-three degrees is used.

In order to obtain the fringe frequency distribution and shape necessary to correct for the bow, the recording geometry of Figure 3 is used. A spherical wave originates from pinhole filter 50, located inside the focal plane of the lens 52 so as to produce a divergent beam 51 of nearly spherical shape. This causes a virtual origin at point 54. A second pinhole filter 56 is the point of origin for a second spherical wave. The two waves interfere at the plane or surface 58 where a phase hologram is recorded. The correcting lens 52 is designed to produce a nearly spherical output wave. A slight departure from sphericity can be brought about by figuring (i.e., figuring means removal of glass by polishing in specific zones to enable a controlled departure from sphericity) one of the surfaces. The shape is determined experimentally by iterating the figure until the hologram produces minimal or zero aberrations over the specified scan length. As stated hereinbefore, the lens 52 is not centered on the beam axis. This off-center arrangement assists in figuring the lens.

In order to obtain a high efficiency, deep groove, phase hologram, the recording medium chosen is photoresist. Photoresists are sensitive only to the shorter wavelengths. One example is Shipley 4750J (manufactured by the Shipley company of Newton, Massachusetts) which is matched in the $\lambda$400nm to $\lambda$450nm region. The $\lambda$457.9nm emission from an argon ion laser is chosen for recording. However, the readout wavelength for numerous applications is 632.8nm(He-Ne) or $\lambda$820nm (laser/diode).

In general, if a hologram is read out at the same wavelength at which it was recorded, no aberrations are introduced. Seidel aberrations can be present if readout wavelength is different from that in recording. A simple method for correcting these aberrations makes use of the fact that, instead of interfering a plane wave-front reference beam with a spherical wave-front object beam, as is generally done to record a Fresnel-type hologram, use is made of the additional freedom gained by making both the reference and object beams spherical (<u>Handbook</u> <u>of</u> <u>Optical</u> <u>Holography</u>, Academic Press 1979, J. Caulfield, Editor, B.R. Clay, pp. 441-444). The amount of correction possible with this method is limited to small angular fields, but not limited to small angles of incidence in the readout beam. The recording procedure calls for a geometry having a point source for the object and a point source for the reference beam in which the points lie on a line perpendicular to the hologram recording plane as shown in Figure 3. These point sources are coherent and emit light at wavelength $\lambda 1$.

Readout is by a collimated source of wavelength $\lambda_2$. Analysis shows that if a hologram of focal length f is desired at $\lambda_2$ and if $\lambda_2 = \alpha\lambda_1$, where $\alpha$ is the wavelength ratio of $\lambda_2$ divided by $\lambda_1$, then the distances A and B are determined by the simultaneous solution of the two equations:

$$\frac{1}{a} \quad \frac{-1}{b} \quad = \quad \frac{1}{\alpha_f} \tag{1}$$

$$\frac{1}{(a)^3} - \frac{1}{(b)^3} = \frac{1}{(\alpha_f)^3} \tag{2}$$

where A is the perpendicular distance between the reference point source 54 and the hologram plane 58, and B is the distance from the object point 56 to the hologram plane 58. Holograms recorded as prescribed above have yielded diffraction limited point images when read out at λ632.8nm and recorded at λ441.6nm. The illustrated embodiment requires the addition of the correcting lens 52, as shown in Figure 3, to the recording set-up for shaping the object beam wave-front which results in line-bow correction and reduces aberrations.

Interference between the spherical reference beam and the nearly spherical object beam results in a fringe shape and spatial frequency distribution, which allows the necessary barrel distortion in the recorded hologram for the purpose of line-bow cancellation while correcting additional aberrations incurred by off-axis readout at the edges of the scanned line. Slight hand-figuring of the lens is required and is done by empirical iteration.

Holograms made as described above and read-out in a scanner with a high f-number scan lens have yielded essentially bow-free scan lines. Nearly diffraction limited performance over the entire scan line was observed.

Figure 4 illustrates that holographic segments 34 recorded on disk 10. By way of example, the periphery of disk 10 includes eight holograms 34 (only three of which are shown in detail) in the eight segments 60 with fringes 36 whose spacing increases with increasing radius from point 38 shown in Figure 2. It should be understood that more or fewer segments 60 may be used without departing from the scope of the present invention.

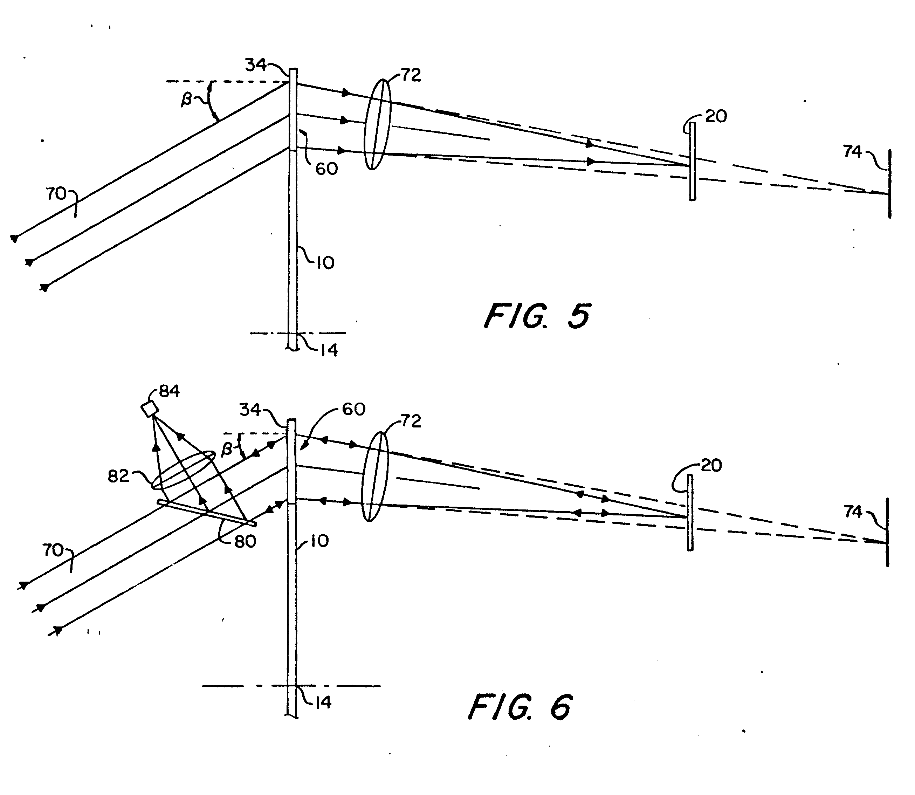

Figure 5 illustrates a write only scanner system utilizing the holographic disk shown in Figure 4. A collimated beam (such as a laser beam) 70 is shown impinging on disk 10 at the outer periphery thereof which comprises hologram 34 recorded on segments 60. The beam 70 is shown to impinge on segments 60 at an angle $\beta$ which is picked such that the p and s plane polarization are substantial. By using such angle, immunity from polarization dependence is improved. The beam is refracted via scan lens 72 onto system focal plane 20. Without scan lens 72, the focal point would be on surface 74.

Figure 6 illustrates a read/write scanner system utilizing the holographic disk of Figure 4. The basic difference between Figures 5 and 6 is that in Figure 6 an optical splitter 80 is introduced. The purpose of the splitter 80 is to enable reading to take place with the same source of illumination, i.e., the collimated beam 70, as is used for writing. The operation of the apparatus of Figure 6 is as follows. During recording, the beam 70 passes through the splitter 80 on the way to the focal plane 20 and after reflection from the object at the focal plane 20 returns along the small path. The splitter 80 reflects some of the returning light to the lens 82 and detector 84. A splitter which transmits substantially 50% of the light and reflects substantially 50% of the light can be used. However, this reduces the overall system efficiency to about 25%. If, on the other hand, a polarization splitter is used, it will transmit nearly 100% of the polarized laser output. The return light in some cases will be randomly polarized and so about 50% of it will be reflected to the detector 84. The system loss is only 50% as compared to the 25% above.

It should be understood that splitter 80 could be a swing out splitter which would enable all the energy to be incident on the recording medium 20 during the write cycle and (when swung in) would allow reading in the manner described. It should also be understood that a document which may be on focal plane 20 may be moved so that the entire document may be read or written on in successive line scans produced by the apparatus of the present invention. It should also be understood that the hologram medium may be either transmissive or reflective. If transmissive, the hologram diffracts and the light beam is directed to a focal plane on the opposite side of the hologram from the light source. If reflective, the hologram diffracts, but the light beam reflects and is directed to a focal plane on the same side of the hologram as the light source.

CLAIMS:

1. A holographic spinner having a plurality of hologram sectors for diffracting light along a scan path as the spinner is rotated about a central spinner axis, characterised in that the hologram sectors diffract with a barrel distortion property opposite to the scan line bow caused by rotation of the spinner, so as to produce a substantially linear scan line.

2. A spinner as claimed in claim 1, characterised in that the hologram sectors include hologram fringes recorded so as to have high diffractive efficiency for both s and p polarized light.

3. A spinner as claimed in claim 1, characterised in that the hologram sectors include fringes recorded so as to have high diffractive efficiency for light of a selected polarization.

4. A spinner as claimed in claim 1, characterised in that the hologram sectors are recorded and are positioned about the spinner so as to have the focussing properties of a large aperture lens with a central lens axis intersecting the plane of rotation of said spinner outside of the perimeter of the spinner.

5. A spinner as claimed in claim 4, characterised in that the distance from the perimeter of the spinner to said central lens axis is substantially greater than the distance to said central spinner axis.

6.    A scanning system comprising:

A.    an optical spinner having a surface rotatable about an axis that is substantially perpendicular to said surface at its point of interaction with said axis;   said spinner divided into a plurality of segments;

B.    a plurality of optical elements each capable of processing light by diffraction in a predetermined manner   each of said elements included respectively in a portion of said segments;

C.    wherein said  portions of said segments are coupled for receiving a light beam at the portion of said segments which include said elements, said light beam received at a predetermined angle in order to maximize efficiency of said system for randomly polarized light;

D.    a scanning plane;

E.    means for receiving said light at said scanning plane after said light is diffracted by said elements;   and

F.    correction means, included in said elements, for enabling a substantially straight line scan locus on said scanning plane as said spinner rotates.

7.    A system as claimed in claim 6, characterised in that said correction means includes a substantially circular pattern of holographically recorded diffractive lenses, each said circular pattern having a centre outside the periphery of said spinner.

8. A system as claimed in claim 7, characterised in that the distance from the periphery to said centre is substantially different than the distance from the axis of rotation of said spinner to the periphery of said spinner.

9. A system as claimed in claim 7, characterised in that the spacing between successive fringes of said pattern of diffractive lenses increases with increasing distance from said centre.

10. A system as claimed in claim 6, characterised in that said elements are holographically recorded so as to remove aberrations otherwise produced during readout of such system.

11. A system as claimed in claim 10, characterised in that said holographic recording is accomplished by use of a correcting lens.

12. A system as claimed in claim 6, characterised in that said elements are holographically recorded such that there is a spatial distribution of fringes in the segments causing the segments during readout by the system to have the property of a lens with barrel distortion in the amount required to reduce curvature in the scanned line to a negligible value.

13. A system as claimed in claim 6, further characterised by means for reducing diffraction efficiency polarization dependence by recording with those parameters that enable a hologram to have substantially jointly maximized efficiencies in the p and s directions.

14. A system as claimed in claim 6, characterised in that each of said portions of said segments are transmissive.

15. A system as claimed in claim 6, characterised in that each of said portions of said segments are reflective.

FIG. 1

PRIOR ART

FIG. 2

FIG. 3

FIG. 4

FIG. 5

FIG. 6